(19) Europäisches Patentamt
European Patent Office
Office européen des brevets

(11) **EP 3 279 495 A1**

(12) **EUROPEAN PATENT APPLICATION**
published in accordance with Art. 153(4) EPC

(43) Date of publication:
**07.02.2018 Bulletin 2018/06**

(51) Int Cl.:
***F16F 1/06*** (2006.01)

(21) Application number: **16772288.3**

(22) Date of filing: **16.03.2016**

(86) International application number:
**PCT/JP2016/058270**

(87) International publication number:
**WO 2016/158405 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 JP 2015072496**

(71) Applicant: **NHK Spring Co., Ltd.**
**Kanagawa 236-0004 (JP)**

(72) Inventors:
• **MATSUBARA Masaru**
**Yokohama-shi**
**Kanagawa 236-0004 (JP)**
• **KAJIGAYA Suguru**
**Yokohama-shi**
**Kanagawa 236-0004 (JP)**

(74) Representative: **Lahrtz, Fritz**
**Isenbruck Bösl Hörschler LLP**
**Patentanwälte**
**Prinzregentenstrasse 68**
**81675 München (DE)**

(54) **COIL SPRING**

(57)     This coil spring (1) has portions (1a, 1b) of high hardness and a portion (1c) in which hardness is lower than the portions (1a, 1b). It is also preferable that the hardness of portions (1a, 1b) that contact other parts is lower than the hardness of sections (1c) that are not said portions. Furthermore, it is preferable that the hardness of the end coil sections (1a, 1b) of the coil spring (1) is lower than the hardness of sections (1c) that are not said sections. And it is preferable that the hardness of the portions (1a, 1b) that contact receiving members (2, 3) for receiving the end coil sections of the coil spring (1) is lower than the hardness of sections (1c) that are not said portions.

FIG. 1

Printed by Jouve, 75001 PARIS (FR)

## Description

### TECHNICAL FIELD

The present invention relates to a coil spring.

### BACKGROUND ART

In conventional art, a compression spring such as a coil spring that is used in a vehicle or the like has required increasing hardness thereof from the viewpoint of weight saving thereof and improvement in durability thereof. In view of this, increasing the hardness of the compression spring has generally been carried out.

### CITATION LIST

#### Patent Literature

Patent Literature 1: Japanese Unexamined Patent Application Publication No.2010-255759

### SUMMARY OF THE INVENTION

#### Technical Problem

Incidentally, when the hardness of a compression spring is increased, there is a high possibility that corrosion and breakage occur accordingly.

Possible causes of the breakage of a compression spring used in a vehicle include contact of a spring seat with the compression spring, contact of adjacent portions of an element wire of the compression spring with each other, and wear and peel-off of a coating due to external factors (chipping or the like) . This causes the base of the compression spring to be exposed, allowing breakage due to corrosion or flaw to occur.

It is supposed that corrosion and breakage occur through a process such as follows.

A part of the compression spring strongly abuts on or is rubbed against itself and/or a mating component, thereby allowing a coating on the part to be peeled off. Then, the part where the coating is peeled off is rusted, allowing a corrosion pit to be generated in the rusted part. Then, concentration of stress on the corrosion pit causes breakage to occur from the part concerned.

As described above, in the present circumstances, the hardness of a coil spring has been increased from the viewpoint of demand for weight saving in terms of environment and cost, while notch sensitivity of the coil spring has become high, leading to a high possibility of corrosion and breakage of the coil spring.

The present invention is made in view of the above actual situation and an object of the invention is to provide a coil spring having improved durability and high reliability.

#### Solution to Problem

In order to solve the problems described above, the present invention provides, as a first aspect thereof, a coil spring including: a part of high hardness; and a part of lower hardness than the part.

The first aspect of the present invention allows the part of low hardness to be applied to a part that requires corrosion durability, and the part of high hardness to be applied to a part that requires fatigue durability, thereby improving life of the coil spring.

The present invention provides, as a second aspect thereof, the coil spring according to the first aspect of the present invention, wherein the hardness of a part that comes into contact with other members is lower than the hardness of a part other than the part that comes into contact with the other members.

The second aspect of the present invention allows the hardness of the part that comes into contact with the other members to be lower than the hardness of the part other than the part that comes into contact with the other members, thus making it possible to lower notch sensitivity, and to suppress a decrease in life of the coil spring even in a case where a coating on the surface of the part that comes into contact with the other members is peeled off.

The present invention provides, as a third aspect thereof, the coil spring according to the first or second aspect of the present invention, wherein the hardness of an end turn part of the coil spring is lower than the hardness of a part other than the end turn part.

The third aspect of the present invention allows the hardness of the end turn part to be lower than the hardness of the part other than the end turn part, thus making it possible to lower the notch sensitivity and to suppress a decrease in life originating from the end turn part.

The present invention provides, as a fourth aspect thereof, the coil spring according to the first or second aspect of the present invention, wherein the hardness of a part that comes into contact with a receiving member adapted to receive an end turn part of the coil spring is lower than the hardness of a part other than the part that comes into contact with the receiving member.

The fourth aspect of the present invention allows the hardness of the part that comes into contact with the receiving member to be lower than the hardness of the part other than the part that comes into contact with the receiving member, thus making it possible to lower the notch sensitivity and to suppress a decrease in life originating from the part concerned.

The present invention provides, as a fifth aspect thereof, the coil spring according to the first or second aspect of the present invention, wherein the coil spring has an end turn part and an effective part, and the hardness of a part where adjacent portions of an element wire of the coil spring come into contact with each other is lower than the hardness of a part of the effective part other than the part where the adjacent portions of the element wire of the coil spring come into contact with each other.

The fifth aspect of the present invention allows the part where the adjacent portions of the element wire of the coil spring come into contact with each other to have a relatively low hardness, thus making it possible to lower the notch sensitivity and to suppress a decrease in life originating from the part concerned.

The present invention provides, as a sixth aspect thereof, the coil spring according to the first aspect of the present invention, wherein the part of high hardness and the part of lower hardness than the part are disposed so as to allow a breakage part of the coil spring to be specified.

The sixth aspect of the present invention allows the part of high hardness and the part of lower hardness than the part to be disposed so as to allow the breakage part of the coil spring to be specified, thus making it possible, where breakage occurs in the coil spring, to quickly specify the breakage part, to perform early maintenance, and to take safety measures which avoid becoming unable to travel.

The present invention provides, as a seventh aspect thereof, a coil spring including: a part of low notch sensitivity; and a part of higher notch sensitivity than the part.

The seventh aspect of the present invention allows the part of low notch sensitivity to be applied to a part that requires corrosion durability, and the part of high notch sensitivity to be applied to a part that requires fatigue durability, thereby improving durability of the coil spring. Therefore, the coil spring has a high reliability.

The present invention provides, as an eighth aspect thereof, the coil spring according to the seventh aspect of the present invention, wherein the notch sensitivity of a part that comes into contact with other members is lower than the notch sensitivity of a part other than the part that comes into contact with the other members.

The eighth aspect of the present invention allows the part that comes into contact with the other members to have a lower notch sensitivity than the part other than the part that comes into contact with the other members, thus making it possible, even in a case where a coating on the surface of the part that comes into contact with the other members is peeled off, to suppress a decrease in life originating from the part concerned.

The present invention provides, as a ninth aspect thereof, the coil spring according to the seventh or eighth aspect of the present invention, wherein the notch sensitivity of an end turn part of the coil spring is lower than the notch sensitivity of a part other than the end turn part.

The ninth aspect of the present invention allows the notch sensitivity of the end turn part to be lower than the notch sensitivity of the part other than the end turn part, thus making it possible to suppress a decrease in life originating from the end turn part.

The present invention provides, as a tenth aspect thereof, the coil spring according to the seventh or eighth aspect of the present invention, wherein the notch sensitivity of a part that comes into contact with a receiving member adapted to receive an end turn part of the coil spring is lower than the notch sensitivity of a part other than the part that comes into contact with the receiving member.

The tenth aspect of the present invention allows the notch sensitivity of the part that comes into contact with the receiving member to be lower than the notch sensitivity of the part other than the part that comes into contact with the receiving member, thus making it possible to suppress a decrease in life originating from the part concerned.

The present invention provides, as an eleventh aspect thereof, the coil spring according to the seventh or eighth aspect of the present invention, wherein the coil spring has an end turn part and an effective part, and the notch sensitivity of a part where adjacent portions of an element wire of the coil spring come into contact with each other is lower than the notch sensitivity of a part of the effective part other than the part where the adjacent portions of the element wire of the coil spring come into contact with each other.

The eleventh aspect of the present invention allows the part where the adjacent portions of the element wire of the coil spring come into contact with each other to have a relatively low notch sensitivity, thus making it possible to suppress a decrease in life originating from the part concerned.

The present invention provides, as a twelfth aspect thereof, the coil spring according to the seventh aspect of the present invention, wherein the part of low notch sensitivity and the part of higher notch sensitivity than the part are disposed so as to allow a breakage part of the coil spring to be specified.

The twelfth aspect of the present invention allows the part of low notch sensitivity and the part of higher notch sensitivity than the part to be disposed so as to allow the breakage part of the coil spring to be specified, thus making it possible, where breakage occurs in the coil spring, to quickly specify the breakage part, to perform early maintenance, and to take safety measures.

**Advantageous Effects of the Invention**

The present invention makes it possible to realize a coil spring having improved durability and high reliability.

**Brief Description of Drawings**

FIG.1 is a front view showing a state of use of a compression spring according to a first embodiment of the present invention.
FIG.2 is a front view showing a first state of use of a compression spring according to a second embodiment of the present invention.
FIG.3 is a front view showing a second state of use of the compression spring according to the second embodiment.
FIG.4 is a graph representing the relation between a spring travel and a load of the compression spring whose spring constant changes.
FIG.5A is a view showing an example of high frequency induction heating being carried out at a softening part N1.
FIG.5B is a view showing an example of high frequency induction heating being carried out at a softening part N2.
FIG. 6A is a view showing an example of electrical heating being carried out at the softening part N1.
FIG. 6B is a view showing an example of electrical heating being carried out at the softening part N2.
FIG.7 is a diagram showing a process of a first method of hot forming.
FIG.8 is a diagram showing a process of a second method of hot forming.
FIG.9 is a diagram showing a process of cold forming.

**Description of Embodiments**

Embodiments of the present invention will be hereinafter described in detail with reference to the drawings as appropriate.

<<First embodiment>>

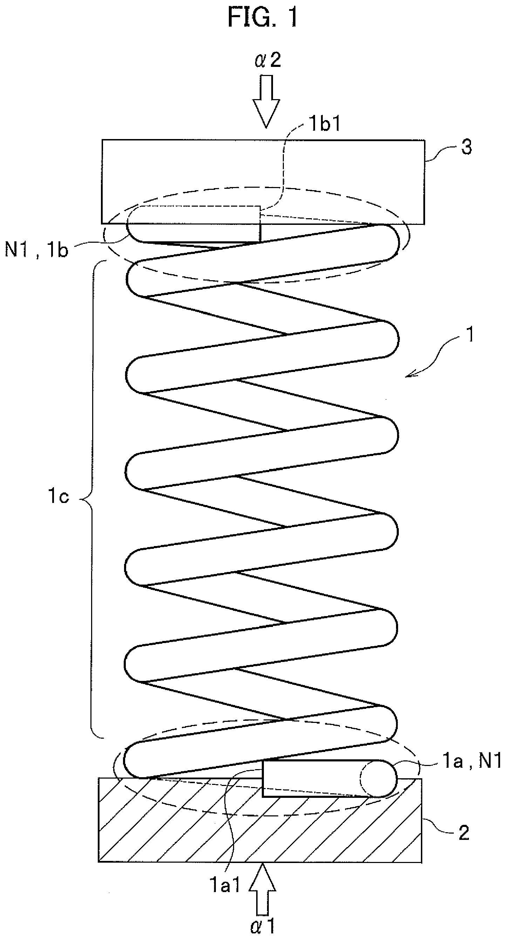

FIG.1 is a front view showing a state of use of a compression spring according to a first embodiment of the present invention.

A compression spring 1 according to the first embodiment includes a lower end turn part 1a and an upper end turn part 1b, and an effective part 1c lying between the lower end turn part 1a and the upper end turn part 1b.

The lower end turn part 1a is a part that is attached to one side of the compression spring 1, and does not contribute to spring action.

The upper end turn part 1b is a part that is attached to the other side of the compression spring 1, and does not contribute to the spring action.

The effective part 1c is a part that exerts the spring action of the compression spring 1, and a part whose spring constant is determined.

The compression spring 1 is formed to allow the effective part 1c to have a spiral shape, for example, using spring steel. Examples of the spring steel that can be used include SUP3, SUP6, SUP7, SUP9, SUP9A, SUP10, SUP11A, SUP12 and SUP13 that are defined in the Japanese Industrial Standards (JIS) G 4801:2005.

The compression spring 1 is attached to be fitted in a lower spring seat 2 and an upper spring seat 3.

The lower spring seat 2 is formed of rubber, resin, metal, or the like. The lower spring seat 2 is configured to allow an edge 1a1 of the lower end turn part 1a of the compression spring 1 to be locked thereby, and to allow a part or the whole of the lower end turn part 1a to be housed therein.

Similarly, the upper spring seat 3 is formed of rubber, resin, metal, or the like. The upper spring seat 3 is configured to allow an edge 1b1 of the upper end turn part 1b of the compression spring 1 to be locked thereby, and to allow a part or the whole of the upper end turn part 1b to be housed therein.

The compression spring 1 is adapted to receive a load in the direction of compression (outlined arrows $\alpha 1$, $\alpha 2$

in FIG.1) from the lower spring seat 2 and the upper spring seat 3, to be used.

The compression spring 1 is adapted to receive the load in the direction of compression to compressively deform, and to apply an extension force (elastic force) according to the amount of deformation to the upper spring seat 3 and the lower spring seat 2.

In this case, the lower end turn part 1a and the upper end turn part 1b of the compression spring 1 are pressed against the lower spring seat 2 and the upper spring seat 3, respectively, with the load according to the amount of compressive deformation of the compression spring 1.

Consequently, the lower end turn part 1a and the upper end turn part 1b are rubbed against the lower spring seat 2 and the upper spring seat 3 in deformation motion of the compression spring 1. The lower end turn part 1a and the upper end turn part 1b produce the same phenomenon, and thus description will be given below, taking the lower end turn part 1a as an example.

As described above, the lower end turn part 1a is rubbed against the lower spring seat 2 to allow a coating thereon to be easily peeled off. When the coating is peeled off at the contact part of the lower end turn part 1a with the lower spring seat 2, the part where the coating is peeled off is rusted to cause corrosion, allowing a corrosion pit to be generated. Accordingly, stress concentration occurs in the corrosion pit, and where the lower end turn part 1a is high in hardness, notch sensitivity thereof is also high. For that reason, there is a possibility that the stress concentration on the corrosion pit causes fissures of the lower end turn part 1a to progress, leading to breakage. The upper end turn part 1b is also the same as the lower end turn part 1a.

In view of the above, the first embodiment (of the present invention) allows the hardness of the lower end turn part 1a and the hardness of the upper end turn part 1b to be made lower than the hardness of other parts of the compression spring 1, thereby lowering the notch sensitivity to suppress progress of fissures in the corrosion pit.

That is, the compression spring 1 according to the first embodiment allows the hardness of the parts (the lower end turn part 1a and the upper end turn part 1b) that come into contact with the lower spring seat 2 and the upper spring seat 3 to be made relatively low, thereby lowering the notch sensitivity.

The lower end turn part 1a is a part formed with the number of turns of, e.g., approximately 0.6 to 0.7. A part of the lower end turn part 1a coming into contact with the lower spring seat 2 is at least softened, thereby lowering the notch sensitivity.

The upper end turn part 1b is a part formed with the number of turns of, e.g., approximately 0.6 to 0.7. A part of the upper end turn part 1b coming into contact with the upper spring seat 3 is at least softened, thereby lowering the notch sensitivity.

The lower end turn part 1a and the upper end turn part 1b of the compression spring 1 are each defined as a softening part N1.

This makes it possible to suppress occurrence of breakages in the lower end turn part 1a and the upper end turn part 1b of the compression spring 1, and to achieve long life of the compression spring 1 to enhance reliability thereof.

<<Second embodiment>>

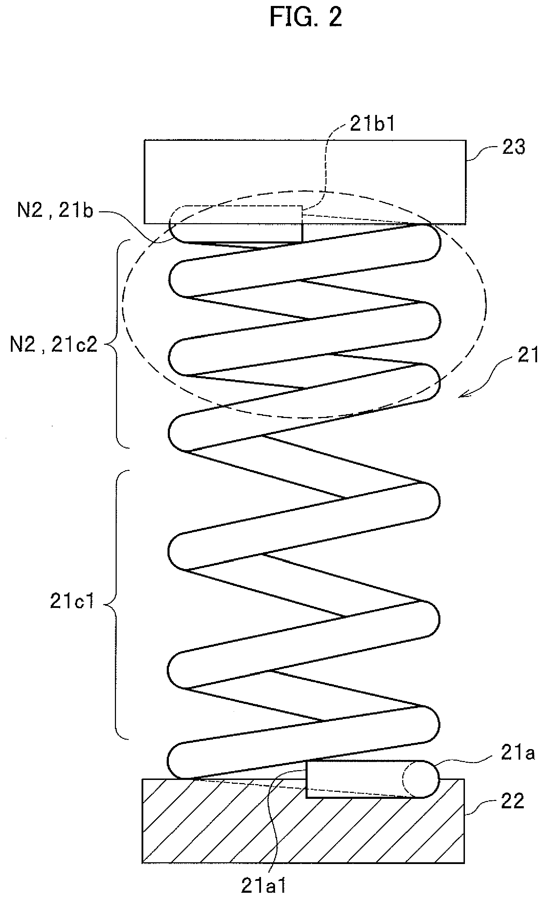

FIG.2 is a front view showing a first state of use of a compression spring according to a second embodiment of the present invention.

A compression spring 21 according to the second embodiment is a compression spring whose spring constant changes during use.

In general, when the spring constant of a compression spring is relatively great, the amount of deformation with respect to a load becomes small. For that reason, there is a case where it is desirable that the amount of deformation of the compression spring is made different between when the load is small and when the load is great.

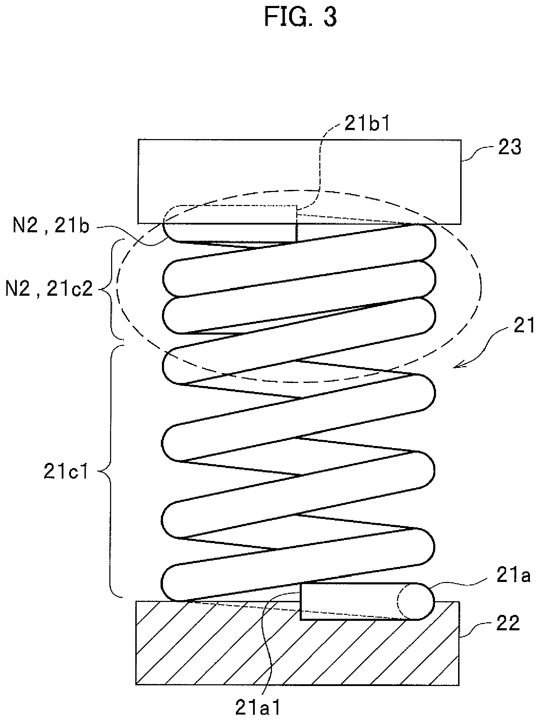

For example, when no load is put on a truck, the compression spring 21 is used in the state shown in FIG.2, and when a heavy load is put on the truck, the compression spring 21 is used in the state shown in FIG.3. FIG.3 is a front view showing a second state of use of the compression spring according to the second embodiment.

The compression spring 21 includes an upper end turn part 21b and a lower end turn part 21a, and a first effective part 21c1 and a second effective part 21c2 lying between the lower end turn part 21a and the upper end turn part 21b.

The upper end turn part 21b is a part that is attached to one side of the compression spring 21, and does not contribute to spring action.

The lower end turn part 21a is a part that is attached to the other side of the compression spring 21, and does not contribute to the spring action.

The first effective part 21c1 is a compression spring part whose spring constant k1 is greater than a spring constant k2 of the second effective part 21c2. The first effective part 21c1 is formed to allow a winding pitch thereof to be wider than that of the second effective part 21c2.

The second effective part 21c2 is a compression spring part whose spring constant k2 is smaller than the spring constant k1 of the first effective part 21c1. The second effective part 21c2 is formed to allow a winding pitch thereof to be narrower than that of the first effective part 21c1.

The compression spring 21 is formed to allow the first effective part 21c1 and the second effective part 21c2 to have a spiral shape, for example, using spring steel in the same way as in the first embodiment. Examples of the spring steel that can be used include the same ones as those in the compression spring 1.

The compression spring 21 is attached to be fitted in a lower spring seat 22 and an upper spring seat 23.

The lower spring seat 22 is formed of rubber, resin, metal, or the like. The lower spring seat 22 is configured to allow an edge 21a1 of the lower end turn part 21a of the compression spring 21 to be locked thereby, and to allow a part or the whole of the lower end turn part 21a to be housed therein.

Similarly, the upper spring seat 23 is formed of rubber, resin, metal, or the like. The upper spring seat 23 is configured to allow an edge 21b1 of the upper end turn part 21b of the compression spring 21 to be locked thereby, and to allow a part or the whole of the upper end turn part 21b to be housed therein.

Next, description will be given of spring characteristics of the compression spring 21.

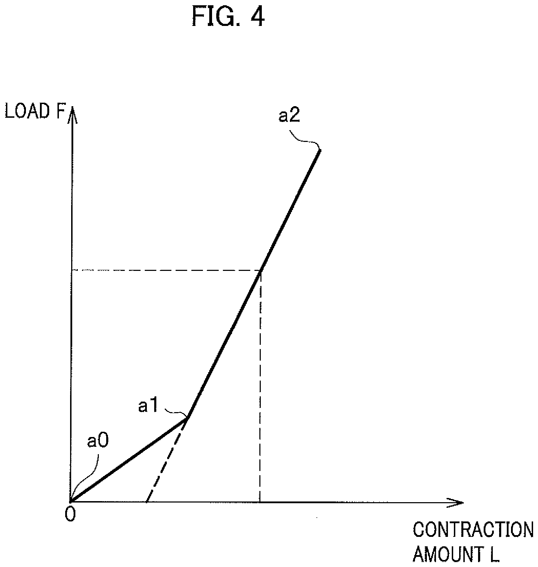

FIG.4 is a graph representing the relation between a spring travel and a load of the compression spring whose spring constant changes.

For the a0-a1 section shown in FIG.4, the first effective part 21c1 and the second effective part 21c2 compressively deform as shown in FIG.2.

When the load is denoted by F; the total amount of contraction of the compression spring 21 is denoted by L; the contraction amount of the first effective part 21c1 is denoted by L1; and the contraction amount of the second effective part 21c2 is denoted by L2, the following expression is obtained.

$$L = L1 + L2$$

From the Hooke's law, the expression of $F = k \times L$ is obtained, and from the example shown in FIG.4 including the first effective part 21c1 and the second effective part 21c2, the following expressions are obtained.

$$F = k1 \times L1, \quad F = k2 \times L2$$

Rearranging the following expression:

$$L = L1 + L2 = (F/k1) + (F/k2) = F \times ((k1 + k2)/k1k2)),$$

the following expression is obtained.

$$F = (k1 \times k2/(k1 + k2)) \times L$$

Therefore, the spring constant K for the a0-a1 section is expressed as follows:

$$K = k1 \times k2/(k1 + k2)$$

For the a1-a2 section shown in FIG.4, the second effective part 21c2 is brought into a closely contacted state in itself as shown in FIG.3 and thus does not function, and thus only the first effective part 21c1 functions.

When the load is denoted by F and the total amount of contraction of the compression spring 21 is denoted by L, the following expression is obtained.

$$F = k1 \times L$$

Therefore, the spring constant K for the a1-a2 section shown in FIG.4 is expressed as follows:

$$K = k1$$

Incidentally, for the a1-a2 section shown in FIG.4, the second effective part 21c2 allows adjacent portions of a wire rod thereof to come into contact with each other.

Consequently, at the time of compressive deformation of the compression spring 21, the adjacent portions of the wire rod of the second effective part 21c2 are rubbed against each other to allow a coating thereon to be easily peeled off. When the coating on the wire rod of the second effective part 21c2 is peeled off, as described above, the part where the coating is peeled off is rusted to cause corrosion, allowing a corrosion pit to be generated and allowing stress concentration to occur in the corrosion pit. At that time, when the second effective part 21c2 is high in hardness, notch sensitivity thereof is also high. For that reason, there is a possibility that the stress concentration on the corrosion pit in the second effective part 21c2 causes fissures to progress, leading to breakage of the second effective part 21c2.

In view of the above, the second embodiment (of the present invention) allows the hardness of the second effective part 21c2 in addition to the lower end turn part 21a and the upper end turn part 21b to be made lower than the hardness of other parts of the compression spring 21, thereby lowering the notch sensitivity to suppress progress of fissures in the corrosion pit. Therefore, the second embodiment allows the hardness of the part where the adjacent portions of the wire rod of the compression spring 21 come into contact with each other, to be made lower, thereby lowering the notch sensitivity.

That is, the compression spring 21 according to the second embodiment allows the hardness of the parts (the lower end turn part 21a and the upper end turn part 21b) that come into contact with the lower spring seat 22 and the upper spring seat 23, and the part (the second effective part 21c2) where the adjacent portions of the wire rod of the compression spring 21 come into contact with each other, to be made lower, thereby lowering the notch sensitivity.

This makes it possible to suppress occurrence of breakage in the lower end turn part 21a, the upper end turn part 21b and the second effective part 21c2 of the compression spring 21, and to achieve long life of the compression spring 21 to enhance reliability thereof.

Of the lower end turn part 21a, the upper end turn part 21b and the second effective part 21c2 that are to be softened in the compression spring 21, the upper end turn part 21b and the second effective part 21c2 are each defined as a softening part N2 for convenience of explanation.

<Softening treatment of the softening parts N1, N2 in the first and second embodiments>

Next, description will be given of the outline of softening treatment of the softening parts N1, N2 in the first and second embodiments.

Regardless of whether cold forming or hot forming is applied to the element wire (wire rod) of the compression spring 1, 21, the softening treatment of the softening parts N1, N2 is carried out as follows. The softening treatment of the softening parts N1 and the softening treatment of the softening parts N2 are similar to each other, and thus description is given below, taking the softening parts N1 as an example.

The compression spring 1 spirally coiled is quenched and tempered. Then, only the softening parts N1 are further tempered.

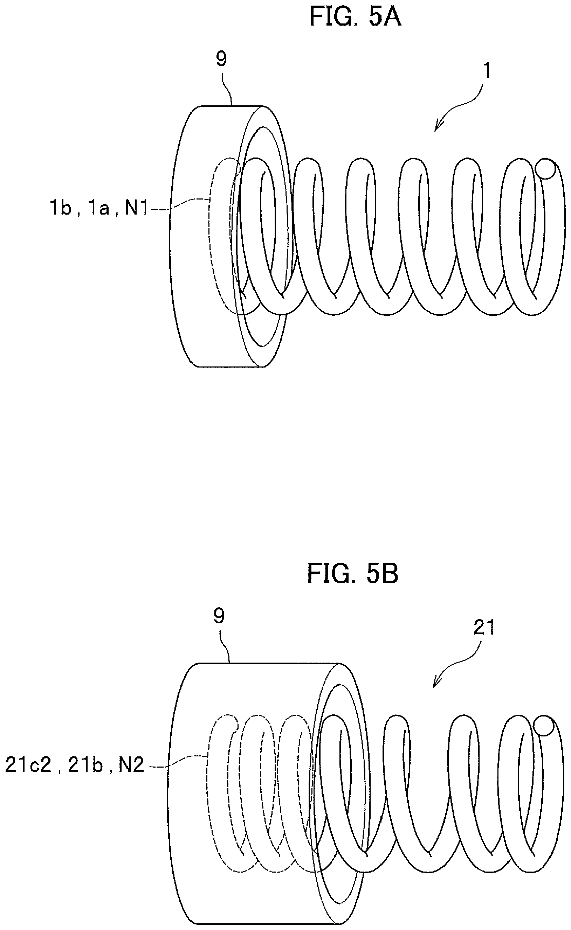

As for tempering of the softening at the softening part N1, as shown in FIG.5A, the softening part N1 is inserted into and heated by a high frequency heating device 9. Similarly, as shown in FIG. 5B, the softening part N2 is inserted into and heated by the high frequency heating device 9. FIG.5A shows an example of the high frequency induction heating being carried out at the softening part N1, and FIG.5B shows an example of the high frequency induction heating being carried out at the softening part N2.

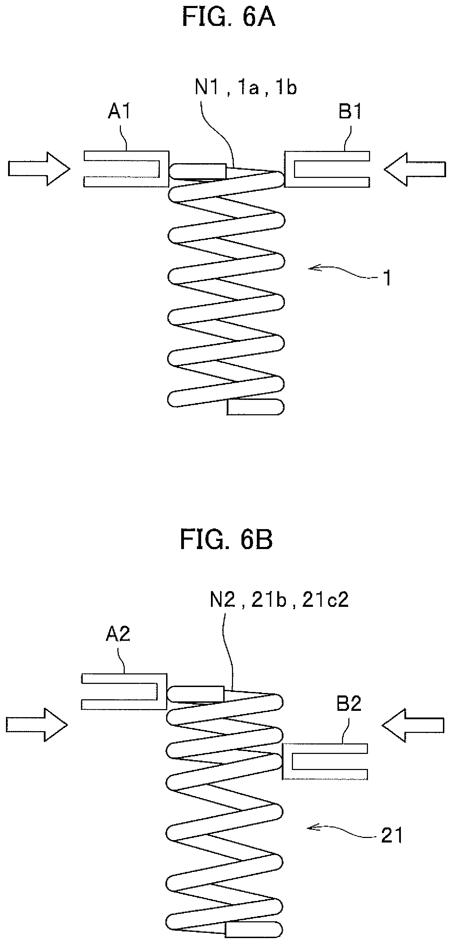

Alternatively, as shown in FIG.6A, electrical heating is carried out to the softening part N1 with a pair of electrodes A1, B1 applied to both faces of the softening part N1. Similarly, as for tempering of the softening at the softening part N2, as shown in FIG.6B, electrical heating is carried out to the softening part N2 with a pair of electrodes A2, B2 applied to both faces of the softening part N2. FIG.6A shows an example of the electrical heating being carried out at the softening part N1, and FIG. 6B shows an example of the electrical heating being carried out at the softening part N2.

Note that the lower end turn part 21a which is the softening part of the compression spring 21 is heated in a similar manner to that in FIG.5A or FIG.6A.

Heating equipment for the above electrical heating system or the high frequency induction heating system has a simple structure and a good universal use, thus making it possible to suppress equipment cost.

Further, concrete description will be given of the softening treatment of the softening parts N1, N2, inclusive of forming of the compression spring 1 and the compression spring 21. As described above, the softening treatment of the softening parts N1 and the softening treatment of the softening parts N2 are carried out in a similar manner, and thus description is given below, taking the softening parts N1 as an example.

First, description will be given of a case where hot forming is carried out using the element wire (wire rod) to which cold forming has been applied.

<First method of hot forming>

A first method of hot forming is carried out as follows.

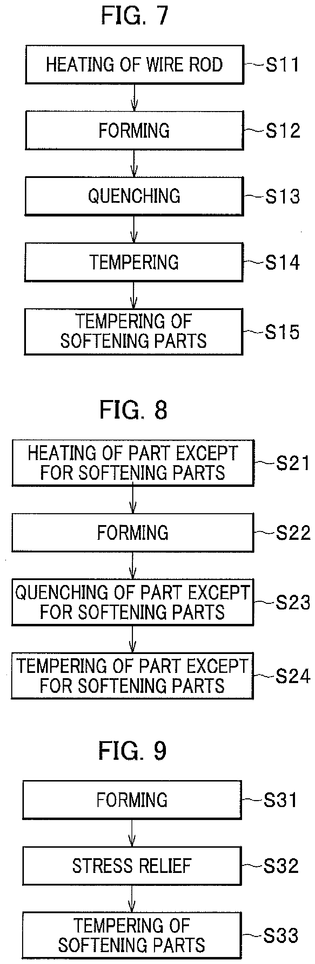

FIG.7 is a diagram showing a process of the first method of hot forming.

First, a straight wire rod made of spring steel is heated at around 950 degrees Celcius for about 9 minutes in the heating device (step S11 in FIG.7).

Then, the heated wire rod is formed into a spiral shape by a coiling machine (step S12).

Then, the wire rod spirally formed is immersed in oil to be rapidly cooled to about 50 degrees Celcius for quenching (step S13) . Thereafter, the oil adhering to the wire rod is washed away, and the spiral wire rod quenched is heated at around 450 degrees Celcius and then slowly cooled in water to be tempered (step S14).

Then, as shown in FIG.5A and FIG. 6A, partial tempering of only the softening parts N1 is carried out at a temperature higher than that of the tempering in step S14 (step S15).

Thereafter, shot peening, powder coating, and baking of a coating material at around 200 degrees Celcius with furnace heating or the like, are carried out.

The above process allows the compression spring 1 to be obtained, in which the hardness of the softening parts N1 (the lower end turn part 1a and the upper end turn part 1b) is made lower than the hardness of other parts, thereby lowering the notch sensitivity.

<Second method of hot forming>

A second method of hot forming is carried out as follows.

FIG.8 is a diagram showing a process of the second method of hot forming.

A part except for the softening parts N1, of a straight wire rod made of spring steel is heated at around 950 degrees Celcius for about 9 minutes (step S21 in FIG.8).

Then, the above wire rod is formed into a spiral shape by a coiling machine (step S22).

Then, the wire rod spirally formed is immersed in oil to be rapidly cooled to about 50 degrees Celcius for quenching of the part except for the softening parts N1 (step S23). Thereafter, the oil adhering to the wire rod is washed away, and the spiral wire rod quenched except for the softening parts N1 is heated at around 450 degrees Celcius and then slowly cooled in water to be tempered (step S24) .

Thereafter, shot peening, powder coating, and baking of a coating material are carried out.

The above method does not require quenching and tempering of the softening parts N1, and allows the compression spring 1 to be obtained, in which the hardness of the softening parts N1 is made lower than the hardness of other parts, thereby lowering the notch sensitivity.

Note that, although in the above second method of hot forming, description is given of the case where quenching and tempering of the softening parts N1 are not carried out, a configuration may be adopted in which the softening parts N1 are quenched a little to form a part of the highest hardness (other than the softening parts N1) and a part of a little low hardness (the softening parts N1).

<Method of cold forming>

Next, description will be given of a case where cold forming is carried out using the element wire (wire rod) to which hot forming has already been applied.

FIG.9 is a diagram showing a process of cold forming.

First, a straight wire rod made of spring steel is formed into a spiral shape by a coiling machine (step S31).

Then, stress relief annealing of the wire rod of a coil shape is carried out (step S32).

Then, as shown in FIG.5A and FIG. 6A, partial tempering of only the softening parts N1 is carried out at a temperature higher than that of the annealing in step S32 (step S33).

The above process allows the compression spring 1 to be obtained, in which the hardness of the softening parts N1 is made lower than the hardness of other parts, thereby lowering the notch sensitivity.

The softening parts N2 and the lower end turn part 21a which is the softening part, of the compression spring 21, are softened in a similar manner to that described above.

<<Third embodiment>>

A compression spring according to a third embodiment is a compression spring that applies thereto the technique explained in the first embodiment and the second embodiment so as to allow a breakage part thereof to be specified.

Concretely, the compression spring is partially softened except for a part to be damaged by breaking, thereby allowing the breakage part to be specified.

For example, in a vehicle or the like, partial softening treatment is carried out so as to allow the breakage part to be arranged at a location which is easily identified. Alternatively, in order to allow the breakage part of the compression spring to be received by other parts, a structure (catcher structure) may be adopted in which partial softening is carried out to form a part where breakage occurs, and the part damaged by breaking is received by the other parts.

This makes it possible to identify the breakage part early, to perform early maintenance, and to take safety measures which avoid becoming unable to travel.

The above configuration produces the following advantageous effects.

1. In the compression spring, the hardness of the part that comes into contact with the other member, or the part where the adjacent portions of the wire rod of the compression spring come into contact with each other, is allowed to be made lower than that of the other parts, thereby making it possible to lower the notch sensitivity. Consequently, corrosion and breakage can be suppressed or avoided. This makes it possible to obtain the compression spring having high durability that can avoid corrosion and breakage.

2. Partially softening the material (for example, SUP7 or the like) having low corrosion durability makes it possible to use the compression spring in a region where salt damage of the compression spring is caused (salt damage region).

3. Adopting the above configuration makes it possible to improve corrosion durability of the compression spring in the salt damage region.

4. Increasing the hardness of the compression spring in which adjacent portions of the element wire come into contact with each other makes it possible to achieve weight saving of the compression spring.

5. Partially softening the compression spring makes it possible to specify the breakage part.

6. Specifying the breakage part of the compression spring as described above makes it possible to arrange a part which does not hinder normal use, as the breakage part in advance, and to suppress influence exerted on the use of the compression spring.

<<Other embodiments>>

1. Although in the above embodiments, description is given of the compression spring 1, 21 as an example of the coil spring, the present invention may be applied to a tension spring.

2. Although in the above first to third embodiments, description is given of various configurations, a configuration obtained by suitably selecting each configuration to combine together may be adopted.

3. The above first to third embodiments describe one example of the present invention, and a variety of concrete modified embodiments of the present invention are possible within the scope described in the claims or the scope described in the embodiments.

**Reference Signs List**

1, 21: Compression spring (Coil spring)
1a, 21a: Lower end turn part (Part of low hardness, Part of low notch sensitivity, Part in contact with other parts, End turn part, Part in contact with a receiving member)
1b, 21b: Upper end turn part (Part of low hardness, Part of low notch sensitivity, Part in contact with other parts, End turn part, Part in contact with a receiving member)
1c: Effective part (Part of high hardness, Part of high notch sensitivity)
2, 22: Lower spring seat (Receiving member)
3, 23: Upper spring seat (Receiving member)
21c1: First effective part (Part of high hardness, Part of high notch sensitivity, Effective part)
21c2: Second effective part (Part of low hardness, Part of low notch sensitivity, Effective part, Part in contact with other parts, Part where adjacent portions of an element wire come into contact with each other)
N1: Softening part (Part of low hardness, Part of low notch sensitivity, Part in contact with other parts, Part in contact with a receiving member)
N2: Softening part (Part of low hardness, Part of low notch sensitivity, Part in contact with other parts, Part in contact with a receiving member, Part where adjacent portions of an element wire come into contact with each other)

**Claims**

1. A coil spring comprising:

   a part of high hardness; and
   a part of lower hardness than the part.

2. The coil spring according to claim 1, wherein
   the hardness of a part that comes into contact with other members is lower than the hardness of a part other than
   the part that comes into contact with the other members.

3. The coil spring according to claim 1 or claim 2, wherein
   the hardness of an end turn part of the coil spring is lower than the hardness of a part other than the end turn part.

4. The coil spring according to claim 1 or claim 2, wherein
   the hardness of a part that comes into contact with a receiving member adapted to receive an end turn part of the
   coil spring is lower than the hardness of a part other than the part that comes into contact with the receiving member.

5. The coil spring according to claim 1 or claim 2, wherein
   the coil spring has an end turn part and an effective part, and
   the hardness of a part where adjacent portions of an element wire of the coil spring come into contact with each
   other is lower than the hardness of a part of the effective part other than the part where the adjacent portions of the
   element wire come into contact with each other.

6. The coil spring according to claim 1, wherein
   the part of high hardness and the part of lower hardness than the part are disposed so as to allow a breakage part
   of the coil spring to be specified.

7. A coil spring comprising:

   a part of low notch sensitivity; and
   a part of higher notch sensitivity than the part.

8. The coil spring according to claim 7, wherein
   the notch sensitivity of a part that comes into contact with other members is lower than the notch sensitivity of a part
   other than the part that comes into contact with the other members.

9. The coil spring according to claim 7 or claim 8, wherein
   the notch sensitivity of an end turn part of the coil spring is lower than the notch sensitivity of a part other than the
   end turn part.

10. The coil spring according to claim 7 or claim 8, wherein
    the notch sensitivity of a part that comes into contact with a receiving member adapted to receive an end turn part
    of the coil spring is lower than the notch sensitivity of a part other than the part that comes into contact with the
    receiving member.

11. The coil spring according to claim 7 or claim 8, wherein
    the coil spring has an end turn part and an effective part, and
    the notch sensitivity of a part where adjacent portions of an element wire of the coil spring come into contact with
    each other is lower than the notch sensitivity of a part of the effective part other than the part where the adjacent
    portions of the element wire come into contact with each other.

12. The coil spring according to claim 7, wherein
    the part of low notch sensitivity and the part of higher notch sensitivity than the part are disposed so as to allow a
    breakage part of the coil spring to be specified.

# FIG. 1

## FIG. 2

# FIG. 3

# FIG. 4

# FIG. 5A

9

1

1b , 1a , N1

# FIG. 5B

9

21

21c2 , 21b , N2

## FIG. 6A

## FIG. 6B

## FIG. 7

HEATING OF WIRE ROD ~S11

FORMING ~S12

QUENCHING ~S13

TEMPERING ~S14

TEMPERING OF SOFTENING PARTS ~S15

## FIG. 8

HEATING OF PART EXCEPT FOR SOFTENING PARTS ~S21

FORMING ~S22

QUENCHING OF PART EXCEPT FOR SOFTENING PARTS ~S23

TEMPERING OF PART EXCEPT FOR SOFTENING PARTS ~S24

## FIG. 9

FORMING ~S31

STRESS RELIEF ~S32

TEMPERING OF SOFTENING PARTS ~S33

## INTERNATIONAL SEARCH REPORT

| International application No. |
|---|
| PCT/JP2016/058270 |

A.  CLASSIFICATION OF SUBJECT MATTER
*F16F1/06(2006.01)i*

According to International Patent Classification (IPC) or to both national classification and IPC

B.  FIELDS SEARCHED

Minimum documentation searched (classification system followed by classification symbols)
F16F1/06

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 9-264360 A  (Exedy Corp.),<br>07 October 1997 (07.10.1997),<br>paragraphs [0010] to [0013]; fig. 2<br>& EP 0798489 A2<br>column 4, line 9 to column 5, line 10; fig. 2 | 1-12 |
| X | JP 62-283232 A  (Toyota Motor Corp.),<br>09 December 1987 (09.12.1987),<br>page 1, lower left column, line 20 to page 3,<br>upper right column, line 7; fig. 2<br>(Family: none) | 1-12 |

☐  Further documents are listed in the continuation of Box C.        ☐  See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14 April 2016 (14.04.16) | 26 April 2016 (26.04.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**EP 3 279 495 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010255759 A